# EUROPEAN PATENT SPECIFICATION

(11) **EP 1 045 045 B1**
(45) Date of publication and mention of the grant of the patent: **26.03.2003**
(21) Application number: 99107096.2
(22) Date of filing: 12.04.1999
(51) Int. Cl.: C23F 11/10, C02F 5/12

(54) **Composition and process for the conditioning of water for industrial use**
Zusammensetzung und Verfahren zur Konditionierung von Industriewasser
Composition et procédé de conditionnement d'eau industrielle

(43) Date of publication of application: 18.10.2000
(73) Proprietor: FABORGA S.A., 1211 Genf 6 (CH)
(72) Inventor: Graf, Anton, 1206 Geneva (CH); Frahne, Dietrich Dr., 72664 Kohlberg (DE)
(74) Representative: Mohnhaupt, Dietrich

(56) References cited:
- EP-A- 0 134 365
- EP-A- 0 297 916
- EP-A- 0 341 536
- EP-A- 0 382 061
- EP-A- 0 677 485
- EP-A- 0 698 580
- EP-A- 0 807 696
- US-A- 3 959 158
- US-A- 4 206 172
- US-A- 4 657 785
- "CHEMICAL ABSTRACTS + INDEXES" CHEMICAL ABSTRACTS + INDEXES, vol. 121, no. 12, XP000664776

## Description

### BACKGROUND OF THE INVENTION

### 1. Field of the Invention

The present invention belongs to the technical field of the treatment of industrial water. In particular, it refers to a composition for the conditioning of water for industrial use, especially boiler feed water, which composition contains a mixture of at least one alkalinizing amine and a long-chain aliphatic polyamine as described below. The invention further contemplates a process for the conditioning of boiler feed water wherein a water conditioning composition as described above is added to boiler feed water, and furthermore a process for the preparation of the composition.

In the present document, the term "boiler feed water" comprises the water which is fed to steam generating or only hot water generating appliances, such as central heating boilers, domestic and industrial water heating systems on the basis of fuel or electric heating, steam boilers of all kind including high and highest duty boilers, for example in electric power stations, and once-through forced flow steam generators. Depending on the nature and construction of the boiler, the boiler feed water may be normal tap water or partially or totally deionized water as well as the boiler condensates. All such waters are comprised in the field of this invention.

Furthermore, the term "conditioning" comprises the treatment of water with the purpose of avoiding or at least strongly reducing corrosion and/or scale and other salt deposits when the water is used as intended. Such conditioning generally comprises adding one or more chemical substances to the water in amounts which should be as small as possible.

### 2. Description of the Prior Art

It is generally known in this technical field, as already mentioned above, that it is necessary to protect steam and hot water generating installations against corrosion and/or scale deposit in order to maintain a safe and trouble-free operation over long time duration. Typically, the feed water for through flow boilers, the feed and boiler water for circulation boilers and forced-circulation boilers as well as the injection water for controlling the steam temperature must fulfill certain and often very strong quality requirements for running the steam generators in a safe and economical manner and for obtaining the purity of the steam required for the superheater and the downstream turbine. When the water-steam system is circulated, the quality of water and steam must not be considered individually and in the context of particular installation parts or regions but always in the context of the entire water-steam circuit.

A widely used circuit conditioning possibility is the alkalinization of the water-steam circuit which is based on the fact that the dissolution of iron from apparatus parts which is observed at very high temperatures is reduced when the pH is raised. A review regarding the feed water conditioning can be found in the Rules for boiler feed water, boiler water and steam in steam generators having an allowed working pressure above 68 bar, edited as Rule VGB-R 450 L by the VGB Technische Vereinigung der Grosskraftwerkbetreiber eV, Essen, Germany, 1988.

Forced-circulation boiler installations can be found especially in the power plants of electric supply companies and in large industrial plants since they allow as great units to generate steam even under supercritical conditions, namely at very high temperatures and pressures. It is known that the thermal efficiency of power plants is improved, due to the second main theorem of thermodynamics, with increased temperature.

Due to the constructive conditions of such steam generators and based on the requirements which are to be fulfilled by the downstream disposed turbines, it is necessary to use salt free water for feeding the system. Such water is obtained by the full deionization of fresh water. All conditioning compositions which are added to the water-steam circuit for corrosion inhibition must be, in the case of forced-circulation boilers, entirely volatile in steam; this will say that the conditioning is effected in using volatile conditioning agents or compositions.

Ammonia has widely been used in the past as a volatile conditioning agent. However, it has turned out that it is not possible to achieve a uniform alkalinization of all installation parts due to the high volatility of ammonia and its unfavorable distribution between water and steam. Attempts have therefore been made to find less volatile bases, and mixtures of differently volatile amines have already been tried to inhibit the different corrosion phenomena under the special phase transfer conditions at vaporization, at condensation and in the two-phase region of wet steam.

Furthermore, it has already become known to use the so-called "filming amines" in compositions or agents for water conditioning. These amines are useful for protecting steel surfaces; this will be explained in greater detail below. For example, the published European patent application No. EP-A1-0,134,365 discloses a composition for inhibiting corrosion in steam generators or for the conditioning of boiler feed water in power plants. The composition comprises at least one filming amine, for example an aliphatic polyamine having from 12 to 22 carbon atoms in the aliphatic moiety, and at least one alkalinizing amine, e.g. cyclohexylamine or an aminoalcohol. One test on an experimental, small forced-circulation boiler is disclosed at 100 bar and 305 °C in using a conditioning agent composed of 63.5 % of stearylaminopropylene amine, 31.7 % of 2-amino-2-methyl-1-propanol and 4.8 % of a dispersing agent, namely a polyoxyethylated aliphatic polyamine.

European patent application No. EP-A1-0,807,696 to the Applicant discloses a method for conditioning the water for high duty forced-flow once-through steam generators having a working pressure of more than 150 bar and a working temperature exceeding 500 °C. This method comprises adding to the feed water a ternary amine mixture comprising from 40 to 70% of monoethanolamine, from 30 to 50% of optionally substituted cyclohexylamine, and from 4 to 10% of a long-chain aliphatic polyamine, for example one of those disclosed in the above mentioned EP-A1-0,134,365; the above percentages add up to 100.

This composition affords a perfect and permanent protection of high-duty steam generators against corrosion and effectively protects the condensate portion of the steam-water system too since it allows to achieve and maintain a maximum conductivity of 0.2 µS·cm⁻¹ and a pH of 9 and higher in the condensate.

This composition further avoids the presence of a dispersing agent; even the chemically "mild" dispersing agents that are to be used according to the document EP-A1-0,134,365 above are not stable under the extreme physical conditions of the system described above and will yield acidic decomposition products which adversely affect the purity of the condensate. However, the conditioning compositions according to this document will need the presence of a dispersing agent in order to make the compositions capable of being correctly metered into the system.

A composition comprising cumolsulfonate, a long-chain aliphatic polyamine and cyclohexylamine is disclosed in EP-A-0 677 485. This system also comprises substantial amounts of polycarboxylic acid and diethanolamine.

A good conditioning agent which is effective for avoiding scale deposits and corrosion should fulfill the following requirements:
alkalinization of the whole system in closed-circuit installations, in particular where there are phase transition and in the two-phase region, in order to reduce the corrosion sensibility of metal surfaces to a minimum;
formation of a scale and corrosion inhibiting membrane at temperatures below about 200 °C;
sufficient heat stability until about 560 °C in order to remain effective in the turbine and in the condensate after passing the boiler and its superheaters;
conductivity of the condensate from the turbine according to VGB directives of at most 0.2 µS·cm⁻¹;
eco-toxicological acceptability when correctly used; and
acceptable price or, respectively, optimal cost-yield ratio.

### SUMMARY OF THE INVENTION

### 1. Objects of the invention

The conditioning composition according to EP-A1-0, 807,696 has proven extremely successful not only in high duty, forced-circulation boiler installations but also in normal duty plants as well. For more detail, it is referred to this document. However, it has been found that, in some cases, the composition presents drawbacks which prevent a wider use thereof, Thus, it has been found that the material of some gaskets and washers which are used in steam generating plants, especially those made of EPDM (ethylene propylene diene terpolymer), are attacked by cyclohexylamine, particularly in the heat.

Furthermore, cyclohexylamine is not a harmless substance; its MAK value is only 10 ppm or 40 mg/m³. The MAK value, based on the "Threshold limit values" of the American Conference of Governmental Industrial Hygienic, is defined as the concentration of a substance (in ppm, i.e. cm³ of the substance when it is in gaseous form, per m³ of air; or in mg of the substance per m³ of air) which can be tolerated at a working rate of 8 hours a day and which does not harm a person even at repeated influence. It has additionally been found that cyclohexylamine does still contain, since it is commonly synthesized from benzene or aniline, respectively, traces of benzene; however, the extremely strict legal provisions in most countries regarding benzene will exclude the use of such cyclohexylamine, and the compound must thus specially be purified which considerably increases its price.

Finally, it is wanted in special cases to increase the relative amount of fatty polyamine in the composition. This is not yet possible in the presently known compositions since this polyamine is soluble in or miscible with the other components in a limited amount only. Beyond this limited solubility, the composition begins to separate into two layers, namely a hydrophilic one, comprising water soluble monoethanolamine and cyclohexylamine, and a lipophilic one, comprising the water insoluble fatty polyamine.

There is therefore a first and major object of the present invention to lift the drawbacks and limitations of the known compositions and to develop a new composition for the use as described above.

Another object of this invention is to provide a new and useful process for the preparation of the new corrosion and/or scale inhibiting composition.

Still another object of the invention is to provide a method for using the new composition in the field of water treatment.

### 2. General description of the invention

The above objects are fulfilled by the composition according to the invention which comprises the following components: Monoethanolamine, a long-chain aliphatic polyamine of the formula

R-[NH-(CH₂)ₚ-]ₙ-NH₂ (I)

wherein:
- R: is an aliphatic hydrocarbon radical having from 12 to 24 carbon atoms,
- p: is an integer of from 1 to 6, and
- n: is an integer of from 1 to 6,
and a salt or a functional derivative of an alkyl substituted arylsulfonic acid. Furthermore, the composition may still contain cyclohexylamine but it is contemplated that its amount is reduced with respect to the compositions known from the document EP-A1-0,807,696 discussed above, in the sense that the cyclohexylamine of that composition is partially or fully replaced by said salt or functional derivative of an alkyl substituted arylsulfonic acid. The composition is free from polycarboxylic acids.

Further features, advantages and special embodiments of the present invention will become apparent from the following detailed description of the invention.

### DETAILED DESCRIPTION OF THE INVENTION

The alkyl substituted arylsulfonic acid present in the new compositions of this invention as a salt or a derivative of the acid function, called "AAA" in the following for sake of abbreviation, acts as a hydrotropic agent for the other constituents of the composition and as a carrier. for the fatty polyamine into the steam phase. It has been found that, whereas the compositions known from EP-A1-0,807,696 are slightly turbid liquids when they contain between 8 and 10% by weight of said fatty polyamine, the new compositions are always clear and limpid liquids even at fatty amine concentrations that greatly exceed those of the known compositions, e.g. at about 20 to 25% by weight. On the other hand, the AAA does not adversely affect the anti-scale and anti-corrosion properties of the other constituents of the composition, although it seems that the AAA are no anti-corrosive or anti-scale agents by their own. This is surprising since the AAA contains a sulfonic acid group which could be expected to cause corrosion. Furthermore, the AAA are extremely thermally stable, and no decomposition has been detected when the sodium salt of p-isopropylbenzene sulfonic acid (sodium cumene sulfonate) was heated up to 350 °C in the presence of aliphatic amines.

AAA compounds which can be used in the compositions of the present invention are, for example, alkyl substituted benzene sulfonic acids and their derivatives, wherein the alkyl group is preferably a lower alkyl group having from 1 to 6 carbon atoms such as methyl, ethyl, propyl, isopropyl, butyl, isobutyl and *tert*.butyl. Preferably, the alkyl substituent is in the para position to the alkyl group. Special basic compounds of this kind are p-toluenesulfonic acid, o- and m-toluenesulfonic acid, 1,3-dimethyl-4-sulfonic acid and the two other isomeric xylenesulfonic acids, p-isopropylbenzenesulfonic acid, p-*tert*.butylbenzenesulfonic acid, 1,3,5-trimethylbenzene-4-sulfonic acid, dialkylaminobenzenesulfonic acid, α-methylnaphthalene-β-sulfonic acid, other alkylnaphthalenesulfonic acids such as Nekal®, sold by BASF, Ludwigshafen Germany, etc. This list is not exhaustive.

Since the compositions according to the invention must be strongly alkaline, the above listed sulfonic acids cannot be used as free acids but will be used in the form of substantially neutral entities such as salts or certain derivatives. Preferred is the use of salts, namely alkali metal salts such as sodium and potassium; ammonium and amine salts such as salts with ammonia, lower alkyl amines (methylamine, ethylamine, propylamine, butylamine), lower hydroxy amines (ethanolamine, propanolamine), diamines (1,2-diaminoethane, 1,3-diaminopropane), cyclic amines (cyclohexylamine), etc. The ammonium and amine salts are particularly interesting since they do not introduce metal ions into the system and, furthermore, they are surprisingly heat stable and resistant, namely to at least about 500 °C. It is believed that these salts, when heated, form the corresponding sulfonic acid amides (sulfonamides) which are known to be very stable compounds. Such acid amides may also be used from the beginning instead or additionally to the sulfonic acid salts. Known sulfonic acid amides are, like the salts of the acid and the acid itself, readily soluble in water, especially the hydroxyalkylamides.

It has been found that the AAA used in the compositions of the invention, have outstanding and, in part, surprising properties when mixed with the two or three other components of the compositions. First, they are extremely heat resistant. The compounds have a good solubility in water and act simultaneously as a hydrotropic agent for homogenizing the compositions (which form limpid preparations), and as a mechanical carrier for the fatty polyamine which is normally only weakly steam volatile. Since this fatty polyamine is the one component of the composition that is the less heat resistant, sufficient amounts thereof can now be carried by the steam on the turbine since the AAA conveys, most probably as ultrafine aerosol droplets, more fatty polyamine into the steam phase. And finally, the AAA are not toxic, have a high MAK value, and are readily available at reasonably low prices. They can also easily be purified.

Fatty polyamines which can be used in the compositions of this invention and which are falling under general formula (I) above are disclosed, for example, in French patent specification No. 1,435,023. Some non-limiting examples of such polyamines are dodecylaminomethylene amine, dodecylaminodimethylene amine, dodecylaminotrimethylene amine (N-stearyl-1,3-propanediamine), the corresponding tetradecyl, hexadecyl and octadecyl compounds, octadecenylaminotrimethylene amine, octadecenylaminodi-(trimethylamino)-trimethylene amine, palmitylaminotrimethylene amine, etc. Presently, the N-oleyl-1,3-propane diamine (i.e. octadecen-(9)ylaminotrimethylene amine) is preferred since it is readily available in sufficiently pure quality.

AAA derivatives are readily available according to classic organic reactions which will not be described here in greater detail since they are well known to the organic chemist. For example, the sulfonic acid amides are accessible by reacting the sulfonic acid or the corresponding sulfonic acid chlorides with ammonium or amine salts, or by heating the ammonium and amine salts.

As a general rule, the corrosion and scale inhibiting compositions of the present invention contain, on a weight basis, from 5 to 30% of a fatty polyamine of the above formula, from 30 to 70% of monoethanolamine, and from 20 to 40% of the AAA, those percentages adding up to 100%. Preferred is for example a composition for scale inhibiting, comprising, on a dry basis, 5% of N-oleylaminopropylene amine, 60% of monoethanolamine, 20% of cyclohexylamine and 15% of sodium cumenesulfonate, and, for inhibiting corrosion in a once-through forced-circulation, high duty power station boiler installation, a composition comprising 15% of N-oleylaminopropylene amine, 60% of monoethanolamine, and 25% of the monoethanolamino salt of cumenesulfonic acid. Generally, from 10 to 90% of the AAA in the compositions may be replaced by cyclohexylamine; compositions which still contain cyclohexylamine generally are low duty ones which may primarily be used against scale deposit at relatively low temperatures and which contain rather low amounts of fatty polyamine, typically between 5 and 8 % by weight.

The compositions of the invention may be composed as described, i.e. as defined above as water and other solvent free matter, but since they are to be used as water additives, they may also be formulated as aqueous formulations. This is preferred when the compositions are manufactured from aqueous solutions of its components. Such aqueous formulations may contain, for example, from 10 to 30 % by weight of the active, dry composition.

The following Table compiles some compositions according to the present invention. All amounts are given in percent by weight of the total composition. All compositions of the Table may exist in water free form or diluted with water to a relatively concentrated base formulation (20 to 50 % by weight). As to the preparation of the compositions, see below.

**Table I**

| Comp. No. | Filming amine, % | Monoethanolamine, % | AAA, % | Cyclohexylamine, % |
|---|---|---|---|---|
| 1 | F1: 5 | 55 | A1: 10 | 30 |
| 2 | F1: 10 | 50 | A1: 20 | 20 |
| 3 | F1: 15 | 45 | A1: 30 | 10 |
| 4 | F1 20 | 40 | A2: 40 | - |
| 5 | F1: 25 | 45 | A4: 30 | - |
| 6 | F2: 10 | 50 | A3: 40 | - |
| 7 | F1: 15 | 55 | A3: 30 | - |
| 8 | F1: 15 | 60 | A4: 25 | - |

A1: sodium cumene sulfonate (commercially available from Klaus F. Meyer GmbH., Fussgonheim, Germany)
A2: cumene sulfonic acid, cyclohexylamine salt (see Preparation 1 below), used as a 20% by weight aqueous solution
A3: cumene sulfonic acid ethanolamide (see preparation 2 below)
A4: cumene sulfonic acid, ethanolamine salt (obtained in an analogous manner as A2)
F1: N-oleyl-1,3-propanediamine
F2: dodecylaminotrimethylene amine (N-stearyl-1,3-propanediamine).

### Preparation of AAA species

### 1. Cumene sulfonic acid, cyclohexylamine salt (A2)

20 g (0.1 mole) of p-isopropylbenzene sulfonic acid are dissolved under stirring in 80 g deionized water. The solution is heated to boiling and is then cooled down to room temperature.

11.0 g (0.11 mole) of cyclohexylamine are dissolved under CO₂ free nitrogen in 45 ml of deionized and carbon dioxide free water. This solution is slowly added with continued stirring and under a CO₂ free gas blanket to the above prepared sulfonic acid solution. The reaction mixture, having a pH of about 8.5, is ready for use in the compositions of this invention.

### 2. Cumene sulfonic acid monoethanolamide (A3)

a) 12 g cumene are reacted, in a manner already known per se, with excess sulfuryl chloride (SO₂Cl₂) in the presence of anhydrous aluminum chloride to yield p-isopropylbenzenesulfonyl chloride which is separated from the reaction mixture.
b) 22.3 g (0.1 mole) of p-isopropylbenzenesulfonyl chloride are suspended in 200 ml of anhydrous ethanol, and the mixture is heated to reflux. To the boiling mixture, a solution of 152 g (0.25 mole) of ethanolamine (2-amino-ethanol) in 300 ml of anhydrous and carbon dioxyde free ethanol is added under stirring and under a blanket of carbon dioxyde free nitrogen.

Refluxing is continued for one hour after the complete addition of the ethanolamine solution. The reaction mixture is allowed to cool to room temperature and kept overnight. Ethanolammonium chloride which has been formed and has crystallized, is removed by filtration. The filtrate is brought to dryness in vacuo, and the residue is recrystallized from benzene. The dry p-cumene sulfonic acid ethanolamide is recovered as white, water soluble crystals.

### Preparation of the compositions

The compositions according to the invention can be prepared by simply mixing its ingredients. As it has already been mentioned above, the compositions may also be formulated as aqueous preparations. In both cases, homogeneous, limpid mixtures are obtained.

However, for best results, it is recommended to follow a certain route. Preferably, the following method is applied: For preparing aqueous formulations, liquid monoethanolamine is blended in the desired weight ration with the fatty polyamine. To this mixture which may also contain cyclohexylamine, a relatively concentrated aqueous solution of the AAA is added under stirring. Stirring is continued for about 30 minutes. Gentle warming may sometimes be necessary. A relatively concentrated aqueous formulation is obtained which is miscible with water in any ratio. Preferably, pure, demineralized and carbon dioxyde free water is employed for dilution. Furthermore, all preparation steps are carried out with such water and under a carbon dioxyde free gas blanket (e.g., air or nitrogen). The pH of these aqueous formulations is generally comprised between 11 and 13.

Special, but simple measures should be taken to obtain and to maintain most effective compositions. Thus, in addition to the measures just described, it is recommended to use purified starting products and to maintain the compositions in sealed containers or in any other condition where they are not in contact with the atmosphere as far as it contains acid gases such as carbon dioxide and sulfur or nitrogen containing acids.

The new compositions of the invention are used in the same manner as those already known in this field. For scale inhibiting, about 10 to 20 ppm thereof are generally metered and maintained in the feed or circulating water. Anti-corrosion use will require less, namely from 0.5 to 5 ppm. Simple tests will determine the minimum amounts to be used.

The new composition has been tested for its effectiveness in a technical installation, comprising a power station block containing a forced-circulation boiler, working pressure 112 bar (i.e. 11.2 MPa), temperature of fresh steam: 525 °C, and four turbines having a power of 28 MW each. An aqueous composition of the invention, comprising 3 g/l of N-oleylaminopropyleneamine, 12 g/l of monoethanolamine and 5 g/l of cumenesulfonic acid monoethanolamine salt, was continuously metered into the boiler feed water in such an amount that the circulating water contained from 7 to 8.5 ppm of these compounds (monitored by a special photocolorimeter which detects the polyamine whose concentration was in this test about 1 ppm)). Samples were taken from the fresh steam conduit in constant intervals, the samples were condensed by cooling, the condensate was passed through a strongly acidic ion exchanger, and the conductivity was determined in the output from the ion exchanger. The pH value of the condensate, upstream the ion exchanger, was in the range of from 9.4 to 9.6, and the conductivity was found to be from about 0.14 to 0.155 µS·cm⁻¹.

The installation was run without interruption for about 6 months, then stopped, and one turbine was opened for inspection. The surface of the turbine blades was found to be extremely smooth and glossy. Under the same condition, but using an ammonia-hydrazine mixture for conditioning, the turbine blades showed fine pin holes due to pitting corrosion.

The compositions of the invention as well as their preparation and use can be modified by the normal knowledge of the one skilled in the art, without departing from the scope of the invention that is defined by the claims. For example, minor amounts of other components, inert under the conditions of use, may be tolerated as additives, such as other alkalinizing amines as those exemplified above.

## Claims

1. Composition for the conditioning of water for industrial use in view of scale and corrosion inhibition, wherein the composition contains at least monoethanolamine as an alkalinizing amine and a long-chain aliphatic polyamine, **characterized in that** the composition further contains an alkyl substituted arylsulfonic acid based component in the form of its salts or acid amide derivatives.

2. Composition according to claim 1, **characterized in that** it further contains cyclohexylamine.

3. Composition according to claims 1 and 2, **characterized in that** said cyclohexylamine replaces from 10 to 90% by weight of said alkyl substituted arylsulfonic acid salt or acid amide derivative.

4. Composition according to claim 1, **characterized in that** said long-chain aliphatic polyamine has the general formula
R-[NH-(CH₂)ₚ-]ₙ-NH₂ (I)
wherein:
R is an aliphatic hydrocarbon radical having from 12 to 24 carbon atoms,
p is an integer of from 1 to 6, and
n is an integer of from 1 to 6.

5. Composition according to claim 4, **characterized in that** it contains N-oleyl-1,3-propanediamine as a long-chain aliphatic polyamine.

6. Composition according to claim 4, **characterized in that** it contains N-stearyl-1,3-propanediamine as a long-chain aliphatic polyamine.

7. Composition according to claim 1, **characterized in that** said alkyl substituted arylsulfonic acid based component is selected from alkali metal salts, lower alkyl amino salts, lower alkanolamino salts, acid amides and acid hydroxyamides of alkyl substituted benzene and naphthalene sulfonic acids and of dialkylaminobenzene sulfonic acids.

8. Composition according to claim 5, **characterized in that** it contains the sodium, potassium, ethanolamine or cyclohexylamine salt of p-cumenesulfonic acid.

9. Composition according to claim 1, **characterized in that** it is present as an aqueous formulation containing from 10 to 30% by weight of the active, dry constituents.

10. Composition according to claim 1, **characterized in that** it contains the said components in a weight ratio of from 5 to 30% of said long-chain aliphatic polyamine, form 30 to 70% of said monoethanolamine, and from 20 to 40% of said alkyl substituted arylsulfonic acid based component.

11. Composition according to claim 10, wherein form 10 to 90% by weight of said alkyl substituted arylsulfonic acid based component are replaced by cyclohexylamine.

12. Process for the conditioning of water for industrial use, especially boiler feed water, **characterized by** adding an effective amount of a composition according to claim 1 or 2 to said water.

13. Process of claim 12, for the conditioning of feed water for one-through forced-circulation boilers having a working pressure of more than 150 bar and a working temperature of more than 500 °C, in view of inhibiting corrosion, **characterized in that** a composition is added that is free from cyclohexylamine, the conductivity of the condensate being less than about 0.2 µS·cm⁻¹ and its pH higher than about 9.

14. Process according to claim 13, **characterized in that** a concentration of said composition of from 0.5 to 5 ppm is maintained in said boiler feed water.

15. Process for the preparation of a composition according to claim 9, **characterized in that** first a mixture of monoethanolamine and long-chain aliphatic polyamine is prepared, to this blend, an aqueous solution of the AAA, optionally also the cyclohexylamine, is added under stirring, and a relatively concentrated aqueous formulation is obtained which is miscible with water in any ratio.

16. Process according to claim 15, **characterized in that** pure, demineralized and carbon dioxyde free water is employed for dilution; and that all preparation steps are carried out using such demineralized and carbon dioxyde free water and under a carbon dioxyde free gas blanket.

17. Process according to claim 16, **characterized in that** that purified constituents are used for preparing the composition.

## Patentansprüche

1. Zusammensetzung zum Konditionieren von Industriewasser zwecks Verhinderung von Kesselstein und Korrosion, worin die Zusammensetzung mindestens Monoethanolamin als alkalisierendes Amin sowie ein langkettiges aliphatisches Polyamin enthält, **dadurch gekennzeichnet, dass** die Zusammensetzung weiterhin einen auf einer alkylsubstituierten Arylsulfonsäure basierenden Bestandteil in Form deren Salze oder Säureamidderivate enthält.

2. Zusammensetzung nach Anspruch 1, **dadurch gekennzeichnet, dass** sie zusätzlich Cyclohexylamin enthält.

3. Zusammensetzung nach Anspruch 1 und 2, **dadurch gekennzeichnet, dass** das Cyclohexylamin 10 bis 90 Gew.-% des genannten Salzes oder Säureamidderivates der alkylsubstituierten Arylsulfonsäure ersetzt.

4. Zusammensetzung nach Anspruch 1, **dadurch gekennzeichnet, dass** das genannte langkettige aliphatische Polyamin der allgemeinen Formel
R-[NH-(CH₂)ₚ-]ₙ-NH₂ (I)
entspricht, worin bedeuten:
R einen aliphatischen Kohlenwasserstoffrest mit 12 bis 24 Kohlenstoffatomen;
p eine ganze Zahl von 1 bis 6, und
n eine ganze Zahl von 1 bis 6.

5. Zusammensetzung nach Anspruch 4, **dadurch gekennzeichnet, dass** sie N-Oleyl-1,3-propandiamin als langkettiges aliphatisches Polyamin enthält.

6. Zusammensetzung nach Anspruch 4, **dadurch gekennzeichnet, dass** sie N-Stearyl-1,3-propandiamin als langkettiges aliphatisches Polyamin enthält.

7. Zusammensetzung nach Anspruch 1, **dadurch gekennzeichnet, dass** der auf der genannten alkylsubstituierten Arylsulfonsäure basierende Bestandteil ausgewählt ist aus Alkalimetallsalzen, Niederalkylaminosalzen, Säureamiden und Säurehydroxyamiden von alkylsubstituierten Benzol- und Naphthalinsulfonsäuren und von Dialkylaminobenzolsulfonsäuren.

8. Zusammensetzung nach Anspruch 5, **dadurch gekennzeichnet, dass** sie das Natrium-, Kalium-, Ethanolamin- oder Cyclohexylaminsalz von p-Cumolsulfonsäure enthält.

9. Zusammensetzung nach Anspruch 1, **dadurch gekennzeichnet, dass** sie als wässrige Formulierung vorliegt, weiche 10 bis 30 Gew.-% an Wirkstoffen als Trockenmasse enthält.

10. Zusammensetzung nach Anspruch 1, **dadurch gekennzeichnet, dass** sie die genannten Bestandteile in Gewichtsverhältnissen von 5 bis 30% an genanntem langkettigen aliphatischen Polyamin, von 30 bis 70% an genanntem Monoethanolamin und von 20 bis 40% an genanntem Bestandteil auf Basis alkylsubstituierter Arylsulfonsäure enthält.

11. Zusammensetzung nach Anspruch 10, bei der 10 bis 90 Gew.-% der genannten alkylsubstituierten Arylsulfonsäure durch Cyclohexylamin ersetzt sind.

12. Verfahren zum Konditionieren von Industriewasser, insbesondere Kesselspeisewasser, **gekennzeichnet durch** eine Zugabe einer wirksamen Menge einer Zusammensetzung nach Anspruch 1 oder 2 zum genannten Wasser.

13. Verfahren nach Anspruch 12 zum Konditionieren von Speisewasser für Zwangsdurchlauf-Dampfkessel mit einem Arbeitsdruck von mehr als 150 bar und einer Betriebstemperatur von über 500°C zwecks Verhinderung von Korrosion, **dadurch gekennzeichnet, dass** eine Zusammensetzung zugegeben wird, die frei von Cyclohexylamin ist, und wobei die Leitfähigkeit des Kondensats kleiner als etwa 0,2µS·cm⁻¹ und sein pH höher als etwa 9 ist.

14. Verfahren nach Anspruch 13, **dadurch gekennzeichnet, dass** im genannten Kesselspeisewasser eine Konzentration der genannten Zusammensetzung von 0,5 bis 5 ppm aufrechterhalten wird.

15. Verfahren zur Herstellung einer Zusammensetzung gemäss Anspruch 9, **dadurch gekennzeichnet, dass** zunächst ein Gemisch aus Monoethanolamin und langkettigem aliphatischem Polyamin erstellt wird, dem Gemisch eine wässrige Lösung der AAA und gegebenenfalls auch des Cyclohexylamins unter Rühren zugefügt wird, wobei eine relativ konzentrierte wässrige Formulierung erhalten wird, die mit Wasser in jedem Verhältnis mischbar ist.

16. Verfahren nach Anspruch 15, **dadurch gekennzeichnet, dass** reines, entmineralisiertes und kohlendioxidfreies Wasser zur Verdünnung verwendet wird, und dass alle Herstellungsschritte unter Verwendung von solchem entmineralisierten und kohlendioxidfreien Wasser und unter kohlendioxidfreiem Schutzgas ausgeführt werden.

17. Verfahren nach Anspruch 16, **dadurch gekennzeichnet, dass** zur Herstellung der Zusammensetzung gereinigte Bestandteile verwendet werden.

## Revendications

1. Composition de conditionnement d'eau industrielle afin d'inhiber le tartre et la corrosion, cette composition contenant au moins de la monoéthanolamine à titre d'amine alcalinisante et une polyamine aliphatique à longue chaîne, **caractérisée en ce que** la composition contient en outre un composant basé sur un acide arylsulfonique substitué par alkyle sous forme de ses sels ou les dérivés acidamide.

2. Composition selon la revendication 1, **caractérisée en ce qu'**elle contient en plus de la cyclohexylamine.

3. Composition selon les revendications 1 et 2, **caractérisée en ce que** ladite cyclohexylamine remplace de 10 à 90% en poids dudit sel ou dérivé acidamide de l'acide arylsulfonique substitué par alkyle

4. Composition selon la revendication 1, **caractérisée en ce que** ladite polyamine aliphatique à longue chaîne répond à la formule générale
R-[NH-(CH₂)ₚ-]ₙ-NH₂ (I)
dans laquelle:
R est un groupement hydrocarboné aliphatique ayant de 12 à 24 atomes de carbone,
p est un nombre entier de 1 à 6, et
n est un nombre entier de 1 à 6.

5. Composition selon la revendication 4, **caractérisée en ce qu'**elle contient de la N-oléyl-1,3-propanediamine à titre de polyamine aliphatique à longue chaîne.

6. Composition selon la revendication 4, **caractérisée en ce qu'**elle contient de la N-stéaryl-1,3-propanediamine à titre de polyamine aliphatique à longue chaîne.

7. Composition selon la revendication 1, **caractérisée en ce que** ledit composant basé sur un acide arylsulfonique substitué par alkyle est choisi parmi les sels de métal alcalin, les sels d'alkylamine inférieure, les sels d'alcanolamine inférieure, les acidamides et les hydroxyamides d'acide des acides sulfonique benzène et naphthalène substitués par alkyle.

8. Composition selon la revendication 5, **caractérisée en ce qu'**elle contient le sel de sodium, de potassium, d'éthanolamine ou de cyclohexylamine d'acide p-cumène sulfonique.

9. Composition selon la revendication 1, **caractérisée en ce qu'**elle est sous forme d'une formulation aqueuse contenant de 10 à 30% en poids de ses composants actifs et anhydres.

10. Composition selon la revendication 1, **caractérisée en ce qu'**elle contient lesdits composants dans un rapport pondéral de 5 à 30% de ladite polyamine aliphatique à longue chaîne, de 30 à70% de ladite monoéthanolamine, et de 20 à 40% dudit composant basé sur un acide arylsulfonique substitué par alkyle.

11. Composition selon la revendication 10, dans laquelle de 10 à 90% en poids dudit composant basé sur un acide arylsulfonique substitué par alkyle sont remplacés par de la cyclohexylamine.

12. Procédé de conditionnement d'eau industrielle, en particulier d'eau d'alimentation de chaudière, **caractérisé par** l'addition à ladite eau d'une quantité efficace d'une composition selon la revendication 1 ou 2.

13. Procédé selon la revendication 12, pour conditionner l'eau d'alimentation de chaudières à passage forcé unique ayant une pression de service de plus de 150 bar et une température de service dépassant 500°C, afin d'inhiber la corrosion, **caractérisé en ce qu'**une composition est ajoutée qui est exempte de cyclohexylamine, la conductivité du condensat étant inférieure à environ 0,2 µS·cm⁻¹ et son pH supérieur à environ 9.

14. Procédé selon la revendication 13, **caractérisé en ce qu'**une concentration de ladite composition comprise entre 0,5 et 5 ppm est maintenue dans ladite eau d'alimentation.

15. Procédé de préparation d'une composition selon la revendication 9, **caractérisé en qu'**un mélange de la monoéthanolamine et de la polyamine aliphatique à longue chaîne est d'abord préparé, une solution aqueuse de l'AAA, éventuellement aussi de la cyclohexylamine, est ajoutée sous agitation, et une formulation aqueuse relativement concentrée est obtenue qui est miscible avec de l'eau dans tous les rapports.

16. Procédé selon la revendication 15, **caractérisé en ce que** de l'eau pure, déminéralisée et exempte de dioxyde de carbone est employée pour la dilution; et que toutes les étapes de préparation sont exécutées en utilisant de telle eau déminéralisée et exempte de dioxyde de carbone et sous une nappe de gaz exempte de dioxyde de carbone.

17. Procédé selon la revendication 16, **caractérisé en ce que** des composants purifiés sont utilisés pour la préparation de la composition.
